# NEUE EUROPÄISCHE PATENTSCHRIFT

(11) **EP 0 839 080 B2**
(45) Veröffentlichungstag und Bekanntmachung des Hinweises auf die Entscheidung über den Einspruch: **20.11.2002**
(45) Hinweis auf die Patenterteilung: 15.09.1999
(21) Anmeldenummer: 96923891.4
(22) Anmeldetag: 22.06.1996
(51) Int. Cl.: B23K 26/08, B23K 37/04

(54) **VERFAHREN ZUM SCHNEIDEN UND/ODER VERSCHWEISSEN VON BLECHEN UND BEARBEITUNGSANLAGE ZUR DURCHFÜHRUNG DES VERFAHRENS**
PROCESS FOR CUTTING AND/OR WELDING SHEET METAL AND INSTALLATION FOR IMPLEMENTING SAID PROCESS
PROCEDE DE DECOUPE ET/OU SOUDAGE DE TOLES ET INSTALLATION D'USINAGE CORRESPONDANTE

(30) Priorität: 20.07.1995 DE 19526466
(43) Veröffentlichungstag der Anmeldung: 06.05.1998
(73) Patentinhaber: ThyssenKrupp Technologies AG, 45128 Essen (DE)
(72) Erfinder: ALBER, Gerhard, D-88213 Ravensburg (DE)
(74) Vertreter: Cohausz & Florack
(86) Internationale Anmeldenummer: EP9602720
(87) Internationale Veröffentlichungsnummer: WO97003787

(56) Entgegenhaltungen:
- EP-A- 0 438 615
- EP-A- 0 574 779
- DE-A- 3 314 748
- DE-A- 4 113 295
- DE-T- 4 293 174
- US-A- 5 122 030
- PATENT ABSTRACTS OF JAPAN PATENT ABSTRACTS OF JAPAN vol. 009, no. 155 (M-392), 29.Juni 1985 vol. 009, no. 155 (M-392), 29.Juni 1985 & JP,A,60 030596 (SHIBUYA KOGYO KK), & JP,A,60 030596 (SHIBUYA KOGYO KK), 16.Februar 1985, 16.Februar 1985,

## Beschreibung

Die Erfindung bezieht sich auf ein Verfahren gemäß Oberbegriff des Anspruches 1 und eine Anlage zur Durchführung des Verfahrens gemäß Oberbegriff des Anspruches 5.

Aus der JP-A-60030596 ist ein gattungsgemäßes Verfahren und eine entsprechende Anlage bekannt, wobei die Bleche zunächst auf einem Träger positioniert und anschließend zu einem Arbeitstisch geführt werden. Mit Hilfe einer Hubvorrichtung werden die Bleche dort eingespannt und anschließend unter der Schweißeinrichtung hindurchgeführt. Nach Beendigung des Schweißvorganges wird die Spannvorrichtung wieder abgesenkt und das fertige Blech entfernt. Erst danach kann auf der Zuführseite ein neuer Spannvorgang beginnen. Während des Absenk- und Anhebevorganges und während des Ein- und Ausfahrens ist hierbei der Schweißvorgang für eine relativ lange Zeit unterbrochen.

In der DE 42 93 174 T1 ist eine Laserstrahlbearbeitungsanlage und ein entsprechendes Verfahren beschrieben, wobei die Träger mit den Werkstücken jeweils nur einseitig in eine Bearbeitungsstation transportiert und nach Bearbeitung über dieselben Transporteinrichtungen wieder zurückgefördert werden. Auch während dieses Hin- und Hertransportes kann dabei naturgemäß nicht geschweißt werden, so daß nur ein diskontinuierlicher Betrieb mit größeren Pausen möglich ist.

Aus der EP 0 438 615 A1 ist eine Einrichtung zum Verbinden von mindestens zwei Blechen durch wenigstens eine durch eine Laserstrahl-Schweißvorrichtung hergestellte Schweißnaht bekannt, wobei Palettenpaare mit darauf liegenden Blechtafeln auf einer Taktförderanlage nebeneinander gefördert werden und die Paletten an einen leistenförmigen Anschlag bzw. ein Lineal herangefördert werden, an das die Grundseiten der Blechtafeln zur Anlage kommen, um die Blechtafeln zueinander stirnseitig auszurichten und wobei die Paletten mit den darauf festgeklemmten Blechtafeln orthogonal zur Förderrichtung der Taktförderanlage gegeneinander bis zum Anschlag der miteinander zu verschweißenden Grundseiten der Bleche bewegt werden. Nach Abheben der Blechtafeln von den Paletten werden die Paletten unterhalb der Förderbahn für die Blechtafeln durch die gleiche Förderanlage zur Beladestation der neuen Blechtafeln zurückgefördert.

Wesentlich bei dieser bekannten Einrichtung ist, daß die zu verschweißenden Bleche auf unterschiedlichen Paletten angeordnet sind und zum Verschweißen der Bleche die Paletten angeordnet sind und zum Verschweißen der Bleche die Paletten zusammengeführt werden müssen, wobei im Bereich der Schweißnaht die Paletten von den Blechen überragt werden, damit unterhalb der Schweißnaht Andrück- und Führungsrollen angeordnet werden können. Das Aufeinanderzubewegen der beiden Paletten erfordert zusätzliche Einrichtungen und auch Zeit. Außerdem ist bei der bekannten Einrichtung für den Transport der auf den Paletten liegenden Bleche von der Belade- bis zur Entladestation nur eine Fördervorrichtung mit im wesentlichen gleichbleibender Geschwindigkeit vorgesehen. Hierbei ist kein kontinuierlicher und lückenoptimierter, d. h. mit möglichst geringem Abstand, Transport der Bleche an der Schweißvorrichtung vorbei möglich, da es zwangsweise beim Be- und Entladen der Bleche von den Paletten zu Verzögerungen und Unterbrechungen kommt. Darüber hinaus können bei diesem Stand der Technik nur Schweißnähte mit im wesentlichen geradem oder einheitlichem Verlauf hergestellt werden.

Aus der DE 33 14 748 C2 ist eine Bearbeitungsmaschine für flache Werkstücke mit zumindest einer Bearbeitungsstation, u. a. auch zum Brennschneiden von Blechtafeln, bekannt, wobei die Werkstücke auf Halteorgane aufweisenden Werkstück-Verschiebevorrichtungen unter einer Bearbeitungsstation verschiebbar sind. Die Werkzeuge sind dabei quer zur Verschieberichtung der Werkstücke verfahrbar. Die Verschiebevorrichtungen dienen hierbei nur zum Transport der Werkstücke unter der Bearbeitungsstation hindurch. Einrichtungen, mit denen die Werkstücke nacheinander zu der Verschiebevorrichtung gefördert werden, sind hierbei nicht dargestellt.

Die DE 41 13 295 A1 betrifft eine Vorrichtung für die Herstellung von KfzKarosserien, bestehend aus einem Rahmengestell, Fertigungsstraße und mindestens einer drehbar auf einer Auflage montierten Trommel, welche Positionierungswerkzeuge für Karosserieteile enthält. Die Auflage der Trommel besteht hierbei aus einem Wagen, der auf einer Grundplatte verschiebbar ist. Das Problem eines lückenoptimierten Transportes der Bleche, d. h. mit möglichst geringem und gleichbleibendem Abstand an der Bearbeitungsvorrichtung vorbei, und zwar in Transportrichtung der Fertigungsstraße, ist hierbei nicht erwähnt.

Der Erfindung liegt nunmehr die Aufgabe zugrunde, ein gattungsgemäßes Verfahren und eine Bearbeitungsanlage vorzuschlagen, bei der die zum Stand der Technik aufgezeigten Probleme nicht bestehen und beliebig gestaltete Bleche für die Bearbeitung auf ihrer Unterlage fest positioniert und zur Bearbeitungsstation und an dieser vorbei gefördert werden.

Die Aufgabe wird durch die in den Patentansprüchen 1 und 5 wiedergegebenen Merkmale gelöst.

Die Verfahrensansprüche 2 bis 4 enthalten sinnvolle ergänzende Verfahrensmerkmale. In den Unteransprüchen 6 bis 11 sind verschiedene Ausführungsformen der erfindungsgemäßen Schweißanlage nach Patentanspruch 5 angegeben.

Erfindungsgemäß können beim Schneiden mindestens ein oder beim Schweißen mindestens zwei oder auch mehrere Blechtafeln bzw. Vorplatinen auf einem Träger bereits so genau positioniert werden, daß mit einer oder mit mehreren Bearbeitungsvorrichtungen gleichzeitig beliebig verlaufende Schnittlinien oder Schweißnähte hergestellt werden. Die Bleche können dann vorzugsweise nacheinander in verschiedene Etappen auf dem einen Träger gemeinsam positioniert werden und mit an sich bekannten Spannvorrichtungen festgeklemmt werden. Je nach Fertigstellung dieser Verbindung werden die Träger in unregelmäßigen Abständen und/oder diskontinuierlich bis vor die Bearbeitungsvorrichtung gefahren. Vor der Bearbeitungsvorrichtung kann es erfindungsgemäß auch zu einem Aufstau mehrerer Träger hintereinander kommen. Unter der Bearbeitungsvorrichtung hindurch werden dann die Bleche möglichst kontinuierlich und/oder lückenoptimiert, d. h. im wesentlichen mit möglichst geringem Abstand, hindurch bewegt, so daß die Bearbeitungsvorrichtung. die insbesondere eine Laserstrahl-Schneid - oder Schweißvorrichtung ist, möglichst ohne Unterbrechung kontinuierlich schneiden oder schweißen kann. Die Geschwindigkeit dieser Bleche unter dieser Bearbeitungsvorrichtung hindurch hängt von der Schneid - oder Schweißgeschwindigkeit und/oder dem beliebigen Verlauf der Schnittlinie oder Schweißnaht bzw. Schnittlinien oder Schweißnähte ab. Die Bearbeitungsvorrichtung ist zweckmäßigerweise an einer die Transportbahn der Bleche überspannenden Portalbrücke angeordnet und kann an dieser entsprechend dem Verlauf der beliebig verlaufenden Schnittlinie oder Schweißnaht verfahren oder bewegt werden. Wenn mehrere Schnittlinien oder Schweißnähte mit kompliziertem Verlauf oder z. B. mehr als zwei Bleche gleichzeitig geschnitten oder verschweißt werden sollen, können auch mehrere Bearbeitungsvorrichtungen unabhängig voneinander in Aktion sein. Nach Beendigung des Schneid- oder Schweißvorganges können die Bleche, vorzugsweise auch mit höherer Geschwindigkeit, zu einer Entnahmevorrichtung gefördert werden und dort in unregeimäßigen Abständen und/oder diskontinuierlich von den Trägern abgehoben werden. Wichtig ist hierbei, daß für eventuelle Verzögerungen bei der Entnahme ein Puffer vorgesehen ist, damit es keine Auswirkungen auf den Schneid- oder Schweißvorgang gibt.

Es hat sich als günstig erwiesen, für den Transport der Träger von der Beladestation bis zur Entladestation und für den Rücktransport der leeren Träger bis zur Beladestation ein Umlaufsystem zu verwenden. Für den von dem Hauptumlaufsystem unabhängigen gezielten Transport an der Bearbeitungsvorrichtung vorbei werden die Paletten mit den lösbar darauf befestigten Trägern und den Blechen über ein Hebersystem angehoben oder abgesenkt und jeweils mit einer von zwei gegenläufig arbeitenden horizontalen Vorschubachsen verbunden. Um auch hier eine kontinuierliche Förderung zu gewährleisten, werden die beiden Vorschubachsen gegenläufig betrieben, d. h. während die eine einen Träger vorwärts transportiert, bewegt sich die andere leer zum Übernahmepunkt zurück. Am Ende des Schneid- oder Schweißvorganges wird wiederum über das Hebesystem der Träger angehoben bzw. abgesenkt und von der Vorschubachse abgetrennt und an das Umlaufsystem angeschlossen.

Durch die in den Unteransprüchen 8 bis 11 beschriebene Positionierung der Bleche auf einem Vorpositioniertisch zwischen Stapelplatz und Träger kann die Lagetoleranz der Bleche in X/Y-Ebene minimiert und vor allen Dingen die Transportzeit in dem Querförderer vom Stapelplatz bis zum Träger verkürzt werden. Die Bleche können entweder mit Magnetspannern von unten und/oder mit Spannleisten pneumatisch von oben auf dem Träger gehalten werden. Im letzteren Fall kommt der Träger mit geöffneten Spannern in der Beladestation an und nach Positionierung der Bleche werden diese Spanner geschlossen. Bei den Magnetspannem können die permanentmagnetischen Auflageleisten durch einen angelegten Stromfluß zum Einlegen der Bleche neutralisiert werden.

Für einen häufigeren Wechsel der Bleche können zur schnelleren Anpassung an verschiedene Blechformen und/oder Schnittlinien- oder Schweißnantverläufe auf dem Träger verstellbare, flexible und/oder gelenkig miteinander verbundene Spannvorrichtungen angeordnet sein. Mit diesen auf einfache Weise in ihrer Lage auf dem Träger veränderbaren Spannvorrichtungen kann auf einen kompletten Austausch des Trägers und/oder der Palette weitgehend verzichtet werden.

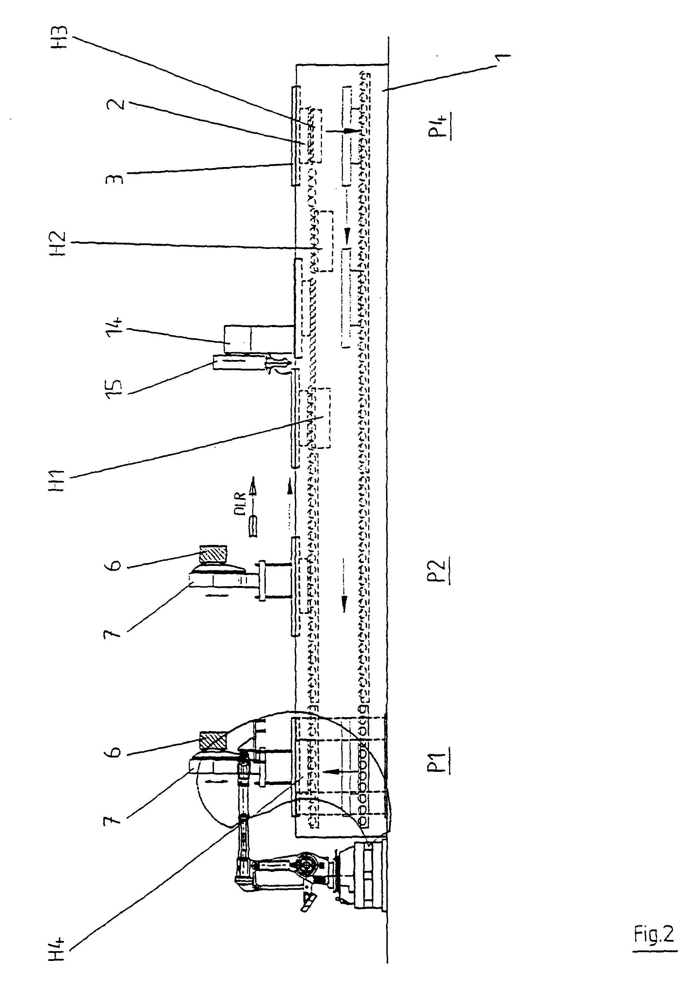

Die Erfindung wird anhand der beigefügten Figuren 1 bis 6 beispielsweise näher erläutert Es zeigen:
- Figur 1: eine Draufsicht auf die wesentlichen Teile der erfindungsgemäßen Bearbeitungsanlage,
- Figur 2: einen senkrechten Schnitt durch das Umlaufsystem 1,
- Figur 3: eine veränderte Ausführungsform zu Figur 1,
- Figur 4: einen senkrechten Schnitt durch die Heber 1,2,
- Figur 5: einen senkrechten Schnitt durch einen Heber 3,
- Figuren 6a bis 6f: verschiedene Blechanordnungen 10d bis 10u, so wie sie auf jeweils einem Träger angeordnet sein können.

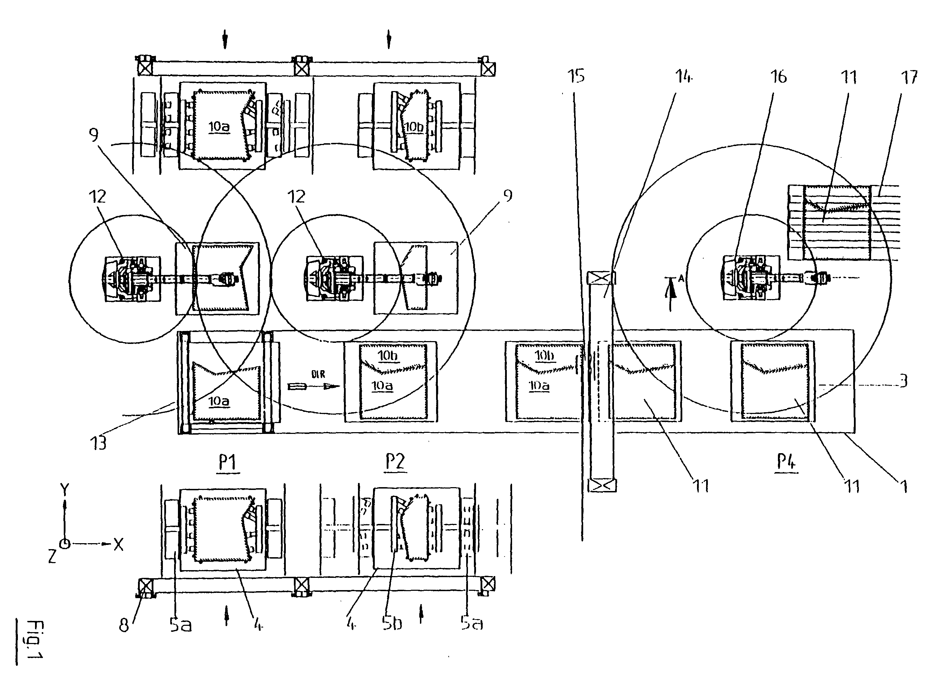

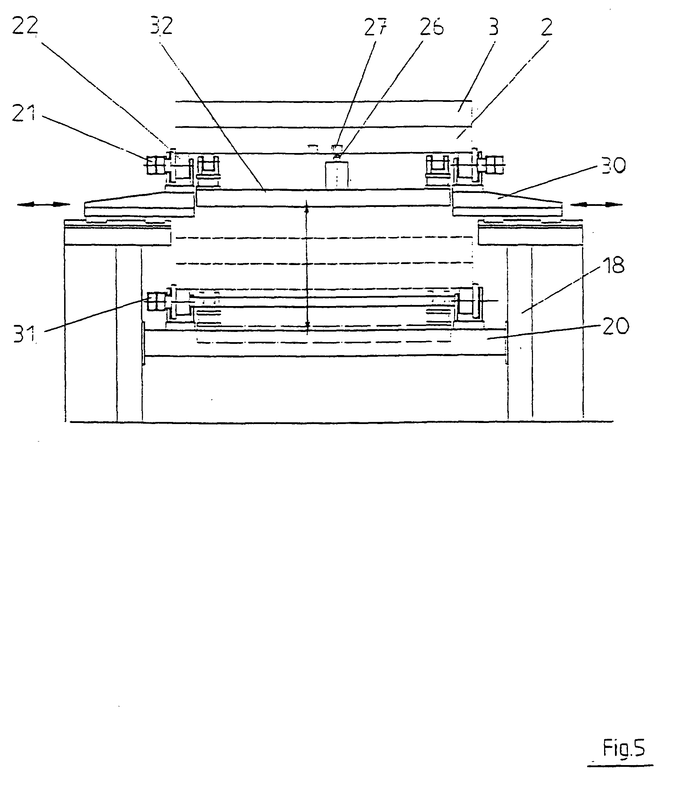

Die Paletten mit den geschnittenen und für den Schweißvorgang vorbereiteten Blechplatten 10a bis 10u (Vorplatinen) werden mit einem nicht dargestellten Gabelstapler in Pfeilrichtung auf den jeweiligen Stapelplätzen 4 abgesetzt. Spreizmagnete 5a bis 5c werden zur Fixierung an den Blechstapel angestellt. Von den in Durchlaufrichtung DLR links und rechts des Umlaufsystemes 1 angeordneten Stapelplätzen 4 werden die Bleche wechselseitig einzeln vom in Figur 1 nur andeutungsweise mit den Stützen 8 dargestellten Querförderer 6 (Linearportalsystem) mit Hilfe von Hubvorrichtungen 7 mit Saugrahmen abgeholt und auf den jeweilig in derselben Querebene liegenden Vorpositioniertischen 9 abgeworfen. Während also Bleche 10 von den Stapelplätzen 4 auf der linken Seite abgeholt werden, können an den Stapelplätzen 4 auf der rechten Seite die leeren Paletten gegen volle ausgetauscht werden. Durch das Ablegen auf den Vorpositioniertischen 9 wird einerseits die vorhandene Lagetoleranz der Bleche in der X/Y-Ebene minimiert und andererseits der Handlingzyklus des Linearportalsystemes 6 verkürzt. In der Position P1 wird ein von unten ankommender leerer Bauteilträger bzw. Träger 3, der üblicherweise mit einer darunter angeordneten Palette 2 lösbar verbunden ist, angehalten und mit einer nicht dargestellten Medienkupplung zur Erzeugung der elektrischen Verbindung mit den Magneten verbunden. In dieser Position P1 wird mit Hilfe des Einlegerobotors 12 nach Figur 1 z. B. das Blech 10a vom Vorpositioniertisch 9 entnommen und mit Hilfe des schwimmenden Saugrahmens in seiner exakten Lage auf dem Träger 3 positioniert. Hierzu können Anschläge 13 zum Positionieren sowohl stationär als auch fest auf dem Träger 3 vorhanden sein. Die Blechtafeln 10 können entweder von unten mit an sich bekannter Magnetspanntechnik, wobei die permanentmagnetischen Auflageleisten durch einen angelegten Stromfluß zum Einlegen der Bleche neutralisiert werden, als auch über von oben pneumatisch angepreßte Spannleisten auf dem Träger 3 positioniert und gehalten werden. Bei der Magnetspanntechnik von unten werden die Auflageleisten nach der Positionierung der Bleche 11 magnetisiert und somit die Bleche festgespannt. Danach können die Abstecker zur Fixierung des Trägers 3 in X/Y/Z-Richtung und die Medienkupplung abgezogen werden, um den Träger mit dem positionierten Blech 10a (vgl. Figur 1) mit Hilfe der Fördervorrichtung 21 auf den Transportrollen 22 zur Position P2 zu fördern. In dieser Position wird das Blech 10b vom entsprechenden Vorpositioniertisch 9, wie vorher das Blech 10a, mit Hilfe des Einlegerobotors 12 auf den Träger 3 gelegt und so mit dem Blech 10a kombiniert, daß ohne Veränderung der Position der beiden Bleche zueinander geschweißt werden kann. Anschlieβend wird der Träger 3 mit den beiden Blechen 10a und 10b so weit bis vor die Schweißvorrichtung 15 gefördert, dort gestoppt und mit Hilfe der vertikalen Hubvorrichtung 29 des Hebers H1 von dem Transportniveau 28 um ca. 50 mm auf die Freilaufrollen 23 abgesenkt. Die Freilaufrollen 23 sind mechanisch genau gefertigt, da ihre Oberkante die genaue Höhenpositionierung der Bleche in Z-Richtung beim Schweißen gewährleisten muß. In dieser unteren Ebene wird der Träger 3 mit Hilfe von Zentrierstiften 26 und Zentrierbuchsen 27 und einem Andocksystem 25 an eine der beiden horizontal beweglichen Vorschubachsen 24 angedockt. Das Andocksystem muß dabei spielfrei und äußerst genau beschaffen sein, da die Positioniergenauigkeit der Bleche relativ zum Schweißkopf in der X/Y-Ebene direkt beeinflußt wird. Alternativ zur beschriebenen Auflage der mit dem Träger 3 verbundenen Palette 2 in Z-Richtung auf den Freilaufrollen 23 ist auch eine direkte Auflage der Paletten 2 auf dem Schlitten der horizontalen Vorschubachse 24 möglich. Nach dem Andocken der Palette 2 wird diese mit der horizontalen Vorschubachse 24 auf die für den Schweißvorgang erforderliche Geschwindigkeit beschleunigt und unter der Portalbrücke 14 durchgefahren. Die Schweißvorrichtungen 15 sind an der Portalbrücke zumindest in Y- und Z-Richtung und vorzugsweise auch um bestimmte Drehachsen beweglich angeordnet. Durch Überlagerung bzw. Programmierung der Geschwindigkeit der horizontalen Vorschubachse 24 und der Bewegungsmöglichkeit der Schweißvorrichtung 15 kann innerhalb der Maximalabmessungen jede beliebige Schweißnahtkontur der Bleche geschweißt werden. Unmittelbar nach Verlassen des Schweißbereiches wird die Palette 2 mit dem fertig verschweißten Bleche 11 im Bereich des Hebers H2 durch Anheben von der horizontalen Vorschubachse 24 entkoppelt und zur Entnahmeposition P4 gefördert. Dort wird sie angehalten und das geschweißte Blech 11 von einem Entnahmerobotor 16 mit Saugrahmen von dem Träger 3 entnommen und zur weiteren Behandlung der Ölstation 17 zugeführt. Die leere Palette 2 mit dem Träger 3 wird danach gemäß Figur 5 nach seitlicher Verschiebung der horizontalen Verschiebevorrichtung 30 nach außen mit Hilfe der Hubeinrichtung 32 um die durch Pfeil dargestellte Hubhöhe auf die untere Rückfördervorrichtung 31 abgesenkt und zur Station P1 zurückgeführt und dort mit Heber H4 in die Aufnahmeposition gebracht.

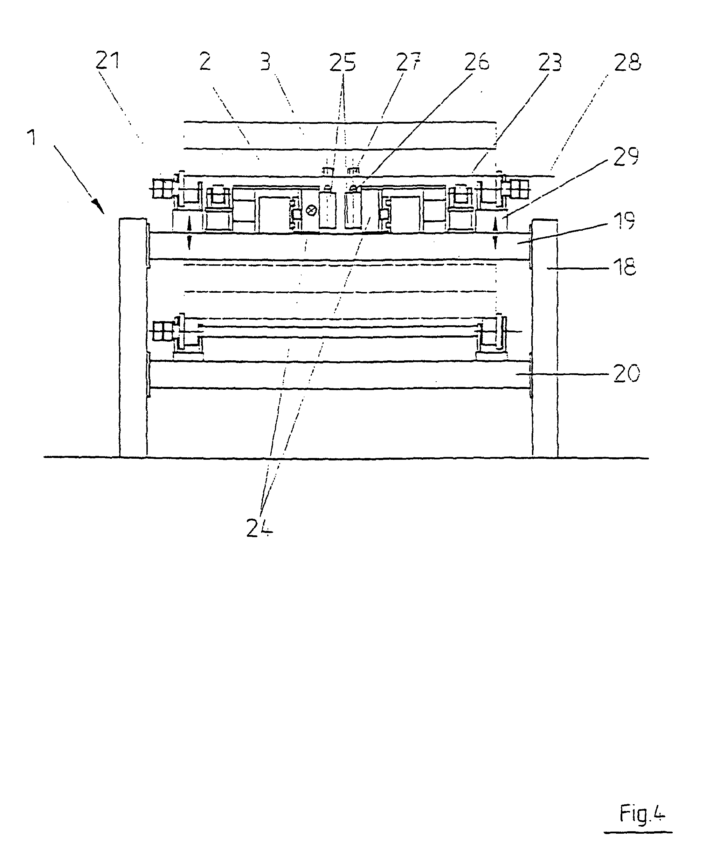

In den Figuren 4 und 5 ist zusätzlich das Traggestell für das Umlaufsystem 1 mit 18, der obere Querbalken mit 19 und der untere Querbalken mit 20 bezeichnet.

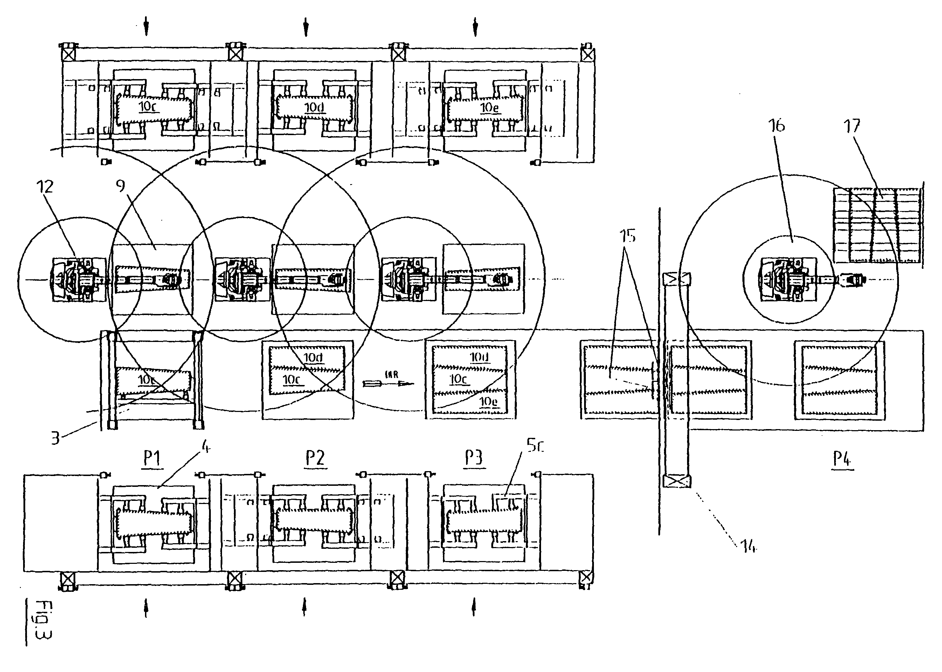

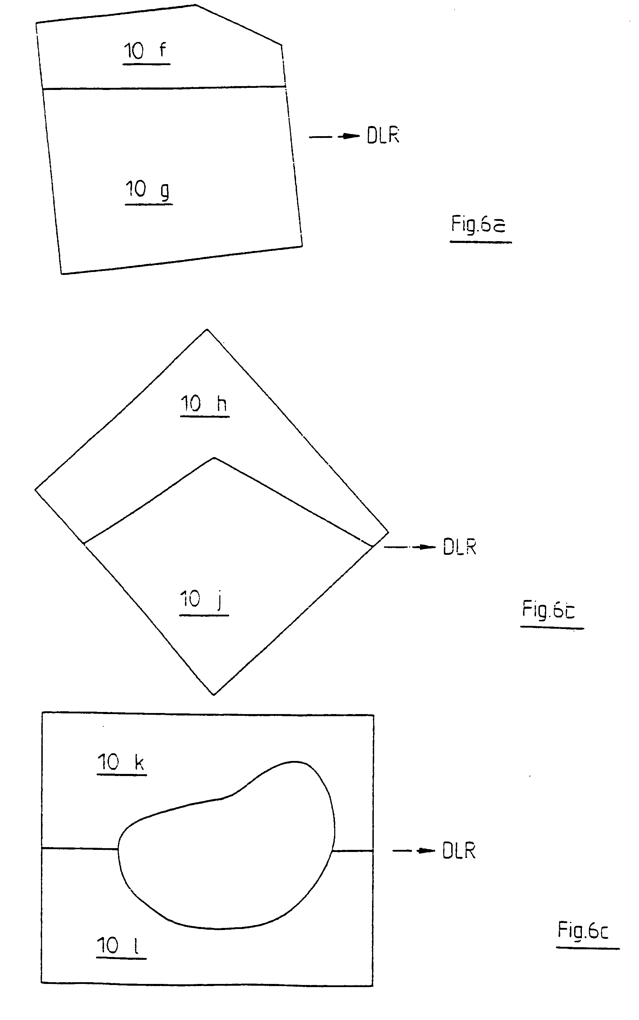

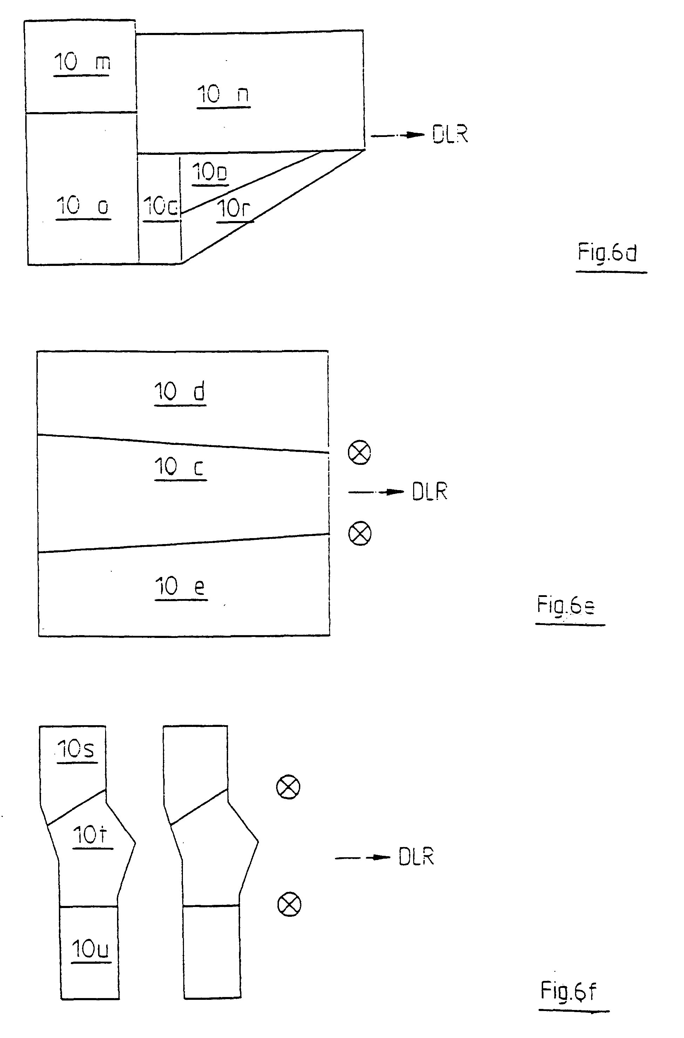

Durch das erfindungsgemäße Anlagenkonzept ist eine maximale Flexibilität bei gleichzeitig kostenoptimierter Fertigung realisiert. So ist ein Schweißen möglich von
- Blechen beliebiger Dicke oder Materialien,
- beliebigen Blechgeometrien,
- geraden Nahten (vgl. Figur 6a),
- ungeraden Nähten (vgl. Figur 6b),
- kreisförmigen oder ovalen Nähten (vgl. Figur 6c)
- zwei oder mehr als zwei Blechen zu einem Gesamtblech in einem Durchlauf (vgl. Figur 6d)
- mehr als eine Schweißnaht mit entsprechender Anzahl von Bearbeitungsköpfen im Durchlaufverfahren (vgl. Figur 3 und Figur 6e)
- "Blechpaketen" (vgl. Figur 6f).

Die Anlage ist für Nachfolge- oder Mixbetrieb hinsichtlich der Bleche und Träger flexibel konzipiert. Die Paletten 2 können unabhängig von der Blechgeometrie immer in der Anlage verbleiben. Die Bauteilträger 3 können auf den Paletten 2 lösbar montiert sein, um bei Bedarf blechspezifisch ausgetauscht zu werden.

Zur Anpassung an verschiedene Formen von miteinander zu verschweißenden Blechen gibt es die Möglichkeit, auf dem Träger feststellbare Spannleisten anzuordnen. Dabei können gerade oder abgewinkelte Nähte durch manuelles Umstellen mit nur einer Spanntechnik ohne Auswechsein des Trägers verarbeitet werden. Hierzu sind die Spannleisten zweckmäßig beidseitig geteilt, wobei die beiden Hälften über eine Drehlagerung miteinander verbunden sind, so daß prinzipiell beliebige Winkel dargestellt werden können.

Durch Verwendung einer beliebig großen Zahl von Vorpositioniertischen 9 und Einlegestationen gleicher Bauweise können beliebig viele Bleche mit einem Durchlauf zu einer Gesamtplatine bei einer minimalen Handlingstaktzeit von z. B. 12 s verarbeitet werden. Je nach Platinensituation kann zur Blechkühlung beim Schweißprozeß eine Kontaktkühlung über die Auflageleisten und sowohl eine Luft- oder Gaskühlung als auch eine Wasserkühlung vom Bearbeitungskopf aus eingesetzt werden. Je nach den Erfordernissen kann auch eine Nahtfolge- bzw. Spaltsensorik eingesetzt werden. Die Qualität der geschweißten Nähte wird sinnvoller Weise durch an sich bekannte nachlaufende optische Sensoren an der Oberseite der Platinen vom Bearbeitungskopf aus On-Line kontrolliert.

Das beschriebene Palettenumlaufsystem kann naturgemäß auch in Verbindung mit einem Schneidportalsystem zum nebenzeitenoptimierten Konturschneiden von Blechtafeln eingesetzt werden.

### Bezugszeichenliste

- (1): Paletfenumlaufsystem
- (2): Palette
- (3): Bauteilträger bzw. Träger für die Bleche (10)
- (4): Stapelplatz für die zu bearbeitenden Bleche (10)
- (5a) - (5c): Spreizmagnete
- (6): Querförderer (Linearportalsystem)
- (7): Hubvorrichtung mit Saugrahmen
- (8): Stützen von (6)
- (9): Vorpositioniertisch für (10)
- (10a)-(10u): Bleche (vor dem Schweißen oder Schneiden)
- (11): Bleche (nach dem Schweißen oder Schneiden)
- (12): Einlegeroboter mit schwimmendem Saugrahmen
- (13): Anschläge zum Positionieren von (10) auf (2)
- (14): Portalbrücke mit (15)
- (15): Schneid- oder Schweißvorrichtung (Bearbeitungsvorrichtung)
- (16): Entnahmeroboter für (11)
- (17): Ölstation
- (18): Traggestell von (1)
- (19): oberer Querbalken
- (20): unterer Querbalken
- (21): Fördervorrichtung
- (22): Transportrollen
- (23): Freilautrollen (Oberkante = Transportieren beim Schweißen)
- (24): Vorschubachsen
- (25): Andocksysteme zum Verbinden von (24) und (2)
- (26): Zentrierstift an (25)
- (27): Zentrierbuchse in (2) für (26)
- (28): Transportniveau der Paletten
- (29): vertikale Hubvorrichtung an (H1) und (H2)
- (30): horizontale Verschiebevorrichtung an (H3)
- (31): untere Rücktördervorrichtung
- (32): Hubeinrichtung an (H3)
- H1 - H4: Heber
- DLR: Durchlaufrichtung von (10)/(11) auf (1)
- P1 - P4: Positionen von (10)/(11) in (1)

## Patentansprüche

1. Verfahren zum Transport von vorzugsweise geometrisch unterschiedlich gestalteten Blechen (10), vorzugsweise Blechtafeln, mit gleichen oder unterschiedlichen Dicken, insbesondere für den Kraftfahrzeugkarosseriebau zu einer Bearbeitungsvorrichtung (15), in der mit Strahlwerkzeugen, insbesondere mit Laserstrahl die Bleche (10) geschnitten und/oder mit geraden und/oder ungeraden Schweißnähten stumpf miteinander verschweißt werden, wobei das oder die Bleche (10) auf einem Träger (3) in der zu bearbeitenden Lage positioniert und festgehalten werden, unter der Bearbeitungsvorrichtung (15), die dabei zumindest quer zur Transportrichtung der Bleche (10) entsprechend dem Verlaut der beliebig verlaufenden Schnittlinie oder Schweißnaht verfahren wird, hindurch bewegt werden und die auf den Trägern (3) befestigten Bleche (10) nach dem Bearbeitungsvorgang hinter der Bearbeitungsvorrichtung (15) zu einer Entnahmevorrichtung weitergefördert werden, in der die bearbeiteten Bleche (11) vom Träger (3) entnommen werden und die leeren Träger anschließend zur Beladestation zurückgefördert werden, wobei die auf den Trägern (3) befestigten Bleche (10) nacheinander mit Hilfe einer Fördervorrichtung (21,22) nach Beendigung des Positionierund Spannvorganges auf dem Träger (3) in unregelmäßigen Abständen und/oder diskontinuierlich bis vor die Bearbeitungsvorrichtung (15) zum Schneiden und/oder Schweißen gefahren werden und anschließend mit einer von der Schneid- oder Schweißgeschwindigkeit und/oder dem Verlauf der Schnittlinie oder Schweißnaht abhängigen Geschwindigkeit unter der Bearbeitungsvorrichtung (15) hindurch bewegt werden, **dadurch gekennzeichnet, dass** die Träger (3) kontinuierlich mittels einer Fördervorrichtung (23-27), die zwei gegenläufige horizontale Schubachsen (24) besitzt, welche abwechselnd mit einem der Träger (3) und/oder einer Palette (2) koppelbar sind, und/oder die Träger mit in Förderrichtung gleichbleibendem, möglichst geringem Abstand, d.h. lückenoptimiert, unter der Bearbeitungsvorrichtung (15) hindurch bewegt werden.

2. Verfahren nach Anspruch 1, **dadurch gekennzeichnet, dass** mehr als eine Schnittlinie oder Schweißnaht in einem Durchlauf kontinuierlich geschnitten oder verschweißt wird.

3. Verfahren nach einem der Ansprüche 1 oder 2, **dadurch gekennzeichnet, dass** mehrere Bearbeitungsvorrichtungen gleichzeitig oder nacheinander in Transportrichtung der Bleche nebeneinander oder hintereinander verfahren werden.

4. Verfahren nach mindestens einem der vorhergehenden Ansprüche, **dadurch gekennzeichnet, dass** die auf einem Träger für den Schneid- oder Schweißvorgang zu positionierenden Bleche auf jeweils einem Vorpositioniertisch abgelegt und anschließend von einem Einlegeroboter gegebenenfalls nacheinander auf dem Träger abgelegt und dort befestigt werden.

5. Anlage zur Durchführung des Verfahrens nach mindestens einem der vorhergehenden Ansprüche, mit Einrichtungen (12) zur Positionierung und Befestigung von ein oder mehreren Blechen (10) auf einem Träger (3), Fördervorrichtungen (21-27) zum Transport der auf den Trägern (3) befestigten Bleche (10) zu der zumindest quer zur Durchlaufrichtung der Bleche (10) verfahrbaren und an einer die Transportbahn der Bleche (10) überspannenden Portalbrücke (14) angeordneten Bearbeitungsvorrichtung (15), zum Transport unter dieser hindurch zu einer Entnahmevorrichtung für die bearbeiteten Bleche (11), Einrichtungen zum Weitertransport der bearbeiteten Bleche sowie Einrichtungen zum Rücktransport der leeren Träger (3) zur Beladungsstation (P1) der Bleche (10) auf die Träger (3), wobei eine erste Fördervorrichtung (21,22) zum Transport der auf den Trägern (3) befestigten Bleche (10) bis zu der Bearbeitungsvorrichtung vorgesehen ist, **gekennzeichnet durch** eine zweite Fördervorrichtung (23-27) zum kontinuierlichen und/oder lückenoptimierten Transport der auf den Trägern (3) befestigten Bleche (10) unter der Bearbeitungsvorrichtung (15) hindurch,
wobei die zweite Fördervorrichtung zwei gegenläufige horizontale Vorschubachsen (24) besitzt, die abwechselnd mit einem Träger (3) und/oder einer Palette (2) koppelbar sind.

6. Bearbeitungsanlage nach Anspruch 5 **dadurch gekennzeichnet, dass** die zweite Fördervorrichtung aus einem in Transportrichtung (X) vor der Bearbeitungsvorrichtung (15) angeordneten Heber (H1) zum Abtrennen von der ersten Fördervorrichtung (21) durch Anheben oder Absenken des Trägers (3)und/oder Palette (2) und zum gleichzeitigen Ankoppeln über Zentrierstifte (26) und Zentrierbuchse (27) an Vorschubachsen (24) und aus einem hinter der Bearbeitungsvorrichtung angeordneten Heber (H2) zum Abkoppeln von den Vorschubachsen (24) durch Absenken oder Anheben auf die Ebene der ersten Fördervorrichtung (21) besteht.

7. Bearbeitungsanlage nach Anspruch 5 oder 6 **dadurch gekennzeichnet, dass** für jedes der auf einem Träger (3) zu positionierenden Bleche (10) ein eigener Vorpositioniertisch (9) vorhanden ist.

8. Bearbeitungsanlage nach Anspruch 7, **dadurch gekennzeichnet, dass** die Vorpositioniertische (9) in einer Reiche parallel neben der Fördervorrichtung (21) angeordnet sind und über einen Querförderer (6) mit ein- oder beidseitig der Fördervorrichtung (21) angeordneten Stapelplätzen (4) für die Bleche (10) verbunden sind.

9. Bearbeitungsanlage nach Anspruch 7 oder 8, **dadurch gekennzeichnet, dass** zum Transport der Bleche (10) von den Vorpositioniertischen (9) auf die Träger (3) und zum lagegenauen Positionieren der Bleche gegen Anschläge auf den Trägern (3) ein Einlegeroboter (12) mit schwimmendem Saugrahmen verwendet wird.

10. Bearbeitungsanlage nach mindestens einem der vorhergehenden Ansprüche 5 bis 9, **dadurch gekennzeichnet, dass** die Bleche (10) mit Magnetspannern von unten und/oder Spannleisten pneumatisch von oben auf dem Träger (39) gehalten werden.

11. Bearbeitungsanlage nach mindestens einem der vorhergehenden Ansprüche 5 bis 10, **dadurch gekennzeichnet, dass** zur schnellen Anpassung an verschiedene Blechformen und/oder Schnittlinienoder Schweißnahtverläufe auf dem Träger (3) verstellbare, flexible und/oder gelenkig miteinander verbundene Spannvorrichtungen für die Bleche (10) angeordnet sind.

## Claims

1. A process for transportation of sheet metals (10), preferably shaped in different geometry, preferably sheet metal panels, in equal or different thickness, particularly for automotive body construction, to a processing device (15) in which said sheet metals (10) are cut by means of beam tools, particularly with a laser beam, and/or butt welded to each other with straight and/or odd weld seams, with the sheet metal(s) (10) being positioned and held on a carrier (3) in the position to be processed, moved through under the processing device (15) which is moved at least transversely to the direction of sheet metal (10) transport in conformity with the course of the arbitrarily running cutting line or weld seam, and where the sheet metals (10) fixed on carriers (3) are conveyed further on to a take-off device after the processing procedure downstream of the processing device (15), with the processed sheet metals (11) being taken from a carrier (3) in said takeoff device and with the empty carriers being conveyed back subsequently to the charging station, and wherein said sheet metals (10) fixed on said carriers (3) being moved consecutively by the aid of a conveyor unit (21,22) after completion of the positioning and clamping procedure on said carrier (3) in irregular intervals and/or discontinuously upstream to the front of the processing device (15) for cutting and/or welding and subsequently being moved through under the processing device (15) at a speed dependent on the cutting or welding speed and/or on the course of the cutting line or welding seam, **characterized in that** said carriers (3) are continuously moved through under said processing device (15) using a conveyor device (23 - 27), having two opposed horizontal thrust axes (24), which may be coupled alternately to one of the carriers (3) and/or a palett (2), and/or with the smallest possible distance, that means in a gap-optimized manner, with said distance remaining constant in the direction of conveyance.

2. A process according, to Claim 1, **characterized in that** more than on cutting line or weld seam is continuously cut or welded in one passage.

3. A process according to any of Claims 1 or 2, **characterised in that** more processing devices are moved simultaneously or consecutively in the direction of transport of sheet metals side by side or one after another.

4. A process according to at least one of the preceding claims, **characterised in that** the sheet metals to be positioned on one carrier for the cutting or welding procedure are deposited each on one pre-positioning table and subsequently deposited by a fixed sequence robot, possibly one after another, on said carrier and fixed there.

5. A plant for the execution of said process according to at least one of the preceding claims, comprised of facilities (12) for positioning and fixing of one or several sheet metals (10) on a carrier (3), conveyor devices (21-27) for transport of sheet metals (10) fixed on said carriers (3) to a processing device (15) located at a portal bridge (14) being at least movable transversely to the direction of passage of sheet metals (10) and spanning over the transport track of said sheet metals (10), for transportation through under it to a take-off device for processed sheet metals (11), facilities for further transport of processed sheet metals as well as facilities for return of empty carriers (3) to the charging station (P1) of sheet metals (10) onto said carriers (3), with a first conveyor device (21, 22) being provided for the transportation of sheet metals (10) fixed on said carriers (3) up to the processing station, **characterized by** a second conveyor device (23-27) for continuous and/or gap-optimized transport of sheet metals (10) fixed on said carriers (3) through under said processing device (15), wherein said second conveyor device is comprised of two oppositely running horizontal feed forward axles (24) which can alternately be coupled to a carrier (3) and/or a pallet (2).

6. A processing plant according to Claim 5, **characterized in that** the second conveyor device consists of a lifter (H1) located upstream of the processing device (15) in the direction of transport (X) for separation of said carrier (3) and/or pallet (2) from the first conveyor device (21) by lifting or lowering and for simultaneous coupling via centring pins (26) and centring bushing (27) at feed forward axles (24), and that said second conveyor device consists of a lifter (H2) located downstream of the processing device for uncoupling from feed forward axles (24) by lowering or lifting on the plane of the first conveyor device (21).

7. A processing plant according to Claim 5 or 6, **characterized in that** there is an own pre-positioning table (9) for each of the sheet metals (10) to be positioned on one carrier (3).

8. A processing plant according to Claim 7, **characterized in that** the pre-positioning tables (9) are arranged in one row in parallel next to the conveyor device (21) and connected via a transverse conveyor (6) to pile yards (4) for sheet metals (10) located at one side or at both sides of the conveyor device (21).

9. A processing plant according to Claim 7 or 8, **characterized in that** a fixed sequence robot (12) with a floating suction frame is employed for transportation of sheet metals (10) from the pre-positioning tables (9) onto said carriers (3) and for position-exact positioning of sheet metals against stoppers on said carriers (3).

10. A processing plant according to at least one of the preceding Claims 5 to 9, **characterized in that** said sheet metals (10) are held on said carrier (3) by way of magnetic chucks from below and/or pneumatically by way of clamping strips from above.

11. A processing plant according to at least one of the preceding Claims 5 to 10, **characterized in that** adjustable, flexible and/or hinge-connected clamping devices for said sheet metals (10) are arranged on said carrier (3) to allow for a quick adaptation to various sheet metal shapes and/or cutting line or weld seam courses.

## Revendications

1. Procédé de manutention de tôles (10) présentant de préférence des géométries différentes, de préférence des feuilles de tôle, de même épaisseur ou de différente épaisseur, en particulier pour la construction de carrosseries automobiles, vers une installation d'usinage (15) dans laquelle les tôles (10) sont découpées avec des outils à faisceau, en particulier faisceau laser, et/ou soudées ensemble par des soudures bord à bord rectilignes et/ou angulaires, la tôle ou les tôles (10) étant positionnée(s) et maintenue (s) sur une console (3) dans la position d'usinage, acheminée(s) sous l'installation d'usinage (15) qui est au moins translatée perpendiculairement au sens de transport des tôles (10) conformément au tracé de la ligne de découpe quelconque ou de soudure et que les tôles fixées sur les consoles (3) sont transportées ensuite après l'opération d'usinage en aval de l'installation d'usinage (15) vers une installation d'enlèvement dans laquelle les tôles usinées sont enlevées de la console (3) et les consoles vides sont ensuite ramenées à la station de chargement, les tôles (10) fixées sur les consoles (3) étant acheminées les unes après les autres à l'aide d'une installation de manutention (21, 22) après l'achèvement de l'opération de positionnement et de serrage sur la console (3) à intervalles irréguliers et/ou de manière discontinue jusqu'à l'installation d'usinage (15) pour la découpe et/ou le soudage et déplacées ensuite sous l'installation d'usinage (15) à une vitesse dépendant de la vitesse de découpe ou de soudage et/ou du tracé de la ligne de coupe ou de la soudure **caractérisé en ce que** les consoles (3) peuvent être déplacés en continu sous l'installation d'usinage (15) au moyen d'un dispositif de transport (23 - 27), qui comprend deux axes de poussée (24) opposés horizontaux, qui peuvent être accouplés alternativement avec un des consoles (3) et/ou une palette (2) et/ou avec dans le sens de transport un écart constant, aussi faible que possible, c'est-à-dire de manière optimisée à l'égard des vides.

2. Procédé suivant la revendication 1 **caractérisé en ce qu'il** est découpé ou soudé continuellement en un seul passage plus d'une ligne de découpe ou plus d'une soudure.

3. Procédé suivant l'une des revendications 1 ou 2 **caractérisés en ce que** plusieurs installations d'usinage sont translatées les unes à côté des autres ou les unes derrière les autres simultanément ou l'une après l'autre dans le sens de transport des tôles.

4. Procédé suivant au moins l'une des revendications précédentes **caractérisé en ce que** les tôles à positionner sur une console pour la découpe ou le soudage sont posées respectivement sur une table de pré-positionnement et posées ensuite sur la console par un robot de pose, le cas échéant les unes après les autres, et fixées ensuite sur cette console.

5. Installation pour l'exécution de ce procédé suivant au moins l'une des revendications précédentes, avec des dispositifs (12) pour le positionnement et la fixation d'une ou de plusieurs tôles (10) sur une console (3), des installations de manutention (21 - 27) pour le transport des tôles (10) fixées sur les consoles (3) vers l'installation d'usinage (15) au moins déplaçable perpendiculairement au sens de passage des tôles (10) et installée à un pont portique (14) enjambant la voie de transport des tôles (10), pour le transport audessous de ladite installation d'usinage vers un dispositif d'enlèvement pour les tôles usinées (11), des installations de manutention pour le transport à suivre des tôles usinées ainsi que des installations pour le retour des consoles vides (3) vers la station de chargement (P1) des tôles (10) sur les consoles (3), une première installation de manutention (21, 22) étant prévue pour le transport des tôles (10) fixées sur les consoles (3), **caractérisée par** une deuxième installation de manutention (23 - 27) pour le transport continu et/ou optimisé à l'égard des vides, des tôles (10) fixées sur les consoles (3) audessous de l'installation d'usinage (15), cette deuxième installation de manutention est équipée de deux axes d'avancement horizontaux travaillant en sens opposé, lesdits axes d'avancement (24) étant accouplés alternativement à une console (3) et/ou à une palette (2).

6. Installation d'usinage suivant la revendication 5, **caractérisée en ce que** la deuxième installation de manutention est constituée par un leveur (H1) situé dans le sens de transport (X) an amont de l'installation d'usinage pour la désolidarisation de la première installation de manutention (21) par le levage ou la descente de la console (3) et/ou de la palette (2) et pour l'accouplement simultané aux axes d'avancement (24) au moyen d'une goupille de centrage (26) et d'une douille de centrage (27), et par un leveur (H2) situé en aval de l'installation d'usinage pour le désacoupplement des axes d'avancement (24) par la descente ou le levage jusqu'au plan de la première installation de manutention (21).

7. Installation d'usinage suivant la revendication 5 ou 6, **caractérisée en ce qu**'il existe une table de prépositionnement (9) pour chacune des tôles (10) à positionner sur une console (3).

8. Installation d'usinage suivant la revendication 7, **caractérisée en ce que** les tables de pré-positionnement (9) sont situées parallèlement en une rangée a côté de l'installation de manutention (21) et reliées via une bande de transport transversale à des places d'empilage (4) des tôles (10) situées d'un côté ou des deux côtés de l'installation de manutention (21).

9. Installation d'usinage suivant la revendication 7 ou 8, **caractérisée en ce qu**'un robot de pose (12) avec cadre ventouse flottant est utilise pour le transport des tôles (10) des tables de prépositionnement (9) sur les consoles (3) et le positionnement exact des tôles sur les consoles (3) contre des butées.

10. Installation d'usinage suivant au moins l'une des revendications 5 à 9, **caractérisée en ce que** les tôles (10) sont maintenues sur les consoles (3) par le bas au moyen de tendeurs magnétiques et/ou pneumatiquement par le haut au moyen de barres de serrage.

11. Installation d'usinage suivant au moins l'une des revendications 5 à 10, **caractérisée en ce que** des dispositifs de serrage des tôles (10) réglables, flexibles et/ou articulés entre eux sont situés sur la console (3) pour permettre l'adaptation rapide à différentes formes de tôle et/ou a différents tracés de découpe ou de soudure.
